(19) Europäisches Patentamt
European Patent Office
Office européen des brevets

(11) EP 4 787 321 A1

(12) EUROPEAN PATENT APPLICATION
published in accordance with Art. 153(4) EPC

(43) Date of publication:
05.08.2026 Bulletin 2026/32

(51) International Patent Classification (IPC):
G06T 13/40 (2011.01)

(21) Application number: 24870235.9

(52) Cooperative Patent Classification (CPC):
G06T 13/40

(22) Date of filing: 22.08.2024

(86) International application number:
PCT/CN2024/113920

(87) International publication number:
WO 2025/066689 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 CN 202311277653

(71) Applicant: Beijing Zitiao Network Technology Co.,
Ltd.
Beijing 100190 (CN)

(72) Inventors:
• RONG, Zhengkun
Beijing 100028 (CN)
• JIANG, Jianwen
Beijing 100028 (CN)
• SONG, Li
Beijing 100028 (CN)
• TANG, Tang
Beijing 100028 (CN)
• WEN, Shilei
Beijing 100028 (CN)

(74) Representative: Grünecker Patent- und
Rechtsanwälte
PartG mbB
Leopoldstraße 4
80802 München (DE)

(54) VIRTUAL IMAGE DRIVING METHOD AND RELATED DEVICE

(57) The disclosure provides a method for driving an avatar, including: obtaining three-dimensional coordinates of a foot keypoint of a human body in an image at a first moment and a second moment; projecting the three-dimensional coordinates of the foot keypoint at the first moment and the second moment respectively onto a two-dimensional plane to obtain two-dimensional coordinates of the foot keypoint at the first moment and the second moment; determining, based on the two-dimensional coordinates of the foot keypoint at the first moment and the second moment, a ground contact state of the foot of the human body at the second moment; determining, based on the ground contact state of the foot of the human body at the second moment and the three-dimensional coordinates of the foot keypoint at the first moment and the second moment, a position offset of a root node of an avatar at the second moment; and adjusting, based on the position offset of the root node of the avatar at the second moment, a position parameter of the root node of the avatar at the second moment. Based on the above method, the disclosure further provides an apparatus, storage medium, and program product for driving an avatar.

OBTAIN THREE-DIMENSIONAL COORDINATES OF A FOOT KEYPOINT OF A HUMAN BODY IN AN IMAGE AT A FIRST MOMENT AND A SECOND MOMENT — 202

PROJECT THE THREE-DIMENSIONAL COORDINATES OF THE FOOT KEYPOINT AT THE FIRST MOMENT AND THE SECOND MOMENT RESPECTIVELY ONTO A TWO-DIMENSIONAL PLANE TO OBTAIN TWO-DIMENSIONAL COORDINATES OF THE FOOT KEYPOINT AT THE FIRST MOMENT AND THE SECOND MOMENT — 204

DETERMINE, BASED ON THE TWO-DIMENSIONAL COORDINATES OF THE FOOT KEYPOINT AT THE FIRST MOMENT AND THE SECOND MOMENT, A GROUND CONTACT STATE OF THE FOOT OF THE HUMAN BODY AT THE SECOND MOMENT — 206

DETERMINE, BASED ON THE GROUND CONTACT STATE OF THE FOOT OF THE HUMAN BODY AT THE SECOND MOMENT AND THE THREE-DIMENSIONAL COORDINATES OF THE FOOT KEYPOINT AT THE FIRST MOMENT AND THE SECOND MOMENT, A POSITION OFFSET OF A ROOT NODE OF AN AVATAR AT THE SECOND MOMENT — 208

ADJUST, BASED ON THE POSITION OFFSET OF THE ROOT NODE OF THE AVATAR AT THE SECOND MOMENT, A POSITION PARAMETER OF THE ROOT NODE OF THE AVATAR AT THE SECOND MOMENT — 210

FIG. 2

EP 4 787 321 A1

**Description**

The disclosure claims priority to Chinese Patent Application No. 202311277653.X, filed on September 28, 2023, and entitled "Method for Driving an Avatar and Related Apparatus", which is hereby incorporated by reference in its entirety.

**FIELD**

The disclosure relates to the field of Internet technologies, and in particular, to a method, apparatus, storage medium and program product for driving an avatar.

**BACKGROUND**

In three-dimensional (3D) full body driving scenarios, the 3D coordinates of body keypoints and position parameters of the root node of the body output by a 3D body keypoint detection model are usually inaccurate and unstable. This may cause an avatar driven by body movements to slide, float above the ground, or sink into the ground in the process of movement and greatly affects user experience.

**SUMMARY**

The method for driving an avatar according to the embodiments in the disclosure may include: obtaining three-dimensional coordinates of a foot keypoint of a human body in an image at a first moment and a second moment; projecting the three-dimensional coordinates of the foot keypoint at the first moment and the second moment respectively onto a two-dimensional plane to obtain two-dimensional coordinates of the foot keypoint at the first moment and the second moment; determining, based on the two-dimensional coordinates of the foot keypoint at the first moment and the second moment, a ground contact state of the foot of the human body at the second moment; determining, based on the ground contact state of the foot of the human body at the second moment and the three-dimensional coordinates of the foot keypoint at the first moment and the second moment, a position offset of a root node of an avatar at the second moment; and adjusting, based on the position offset, a position parameter of the root node of the avatar at the second moment.

In an embodiment in the disclosure, projecting the three-dimensional coordinates of the foot keypoint at the first moment and the second moment respectively onto the two-dimensional plane includes: projecting the three-dimensional coordinates of the foot keypoint at the first moment and the second moment respectively onto the two-dimensional plane formed by a horizontal direction and a vertical direction.

In an embodiment in the disclosure, determining, based on the two-dimensional coordinates of the foot keypoint at the first moment and the second moment, the ground contact state of the foot of the human body at the second moment includes: determining, based on the two-dimensional coordinates of the foot keypoint at the first moment and the second moment, a moving speed of the foot keypoint at the second moment; and determining, based on the moving speed, the ground contact state of the foot of the human body at the second moment.

In an embodiment in the disclosure, determining the moving speed of the foot keypoint at the second moment includes: determining, based on the two-dimensional coordinates of the foot keypoint at the first moment and the second moment, a moving distance of the foot keypoint on the two-dimensional plane from the first moment to the second moment; determining, based on a difference between the first moment and the second moment and the moving distance, a moving distance of the foot keypoint per unit time; and using the moving distance per unit time as the moving speed of the foot keypoint.

In an embodiment in the disclosure, determining, based on the moving speed, the ground contact state of the foot of the human body at the second moment includes: comparing the moving speed of the foot keypoint with a foot ground contact threshold; and determining that the foot where the foot keypoint is located is in a non-ground contact state at the second moment in response to determining that the moving speed of the foot keypoint is greater than the foot ground contact threshold; or determining that the foot where the foot keypoint is located is in a ground contact state at the second moment in response to determining that the moving speed of the foot keypoint is less than or equal to the foot ground contact threshold.

In an embodiment in the disclosure, determining, based on the moving speed, the ground contact state of the foot of the human body at the second moment further includes: obtaining a depth parameter of the human body in the image; projecting, based on the depth parameter, a preset average body height parameter onto the two-dimensional plane to obtain a projected height; and using a product of the projected height and a preset first proportion as the foot ground contact threshold.

In an embodiment in the disclosure, determining, based on the moving speed, the ground contact state of the foot of the human body at the second moment further includes: determining whether both feet of the human body in the image are in the ground contact state or are both off the ground; setting both feet of the human body in the image to be in the non-ground contact state at the second moment in response to determining that both feet of the human body in the image are off the ground; and comparing respective moving speeds of the foot keypoints of both the feet in response to determining that both feet of the human body in the image are neither both on the ground nor both off the ground, setting the foot with a smaller moving speed of the foot keypoint as in the ground contact state at the second moment, and setting another foot as in the non-ground contact state at the second moment.

In an embodiment in the disclosure, determining whether the foot of the human body in the image is off the ground includes: determining, based on the two-dimensional coordinates of the foot keypoint at the first moment and the second moment, a moving speed of the foot keypoint in a vertical direction; comparing the moving speed of the foot keypoint in the vertical direction with a foot lift-off threshold; and determining that the foot where the foot keypoint is located is off the ground in response to determining that the moving speed of the foot keypoint in the vertical direction is greater than the foot lift-off threshold; or determining that the foot where the foot keypoint is located is not off the ground in response to determining that the moving speed of the foot keypoint in the vertical direction is less than or equal to the foot lift-off threshold.

In an embodiment in the disclosure, determining whether the foot of the human body in the image is off the ground further includes: obtaining a depth parameter of the human body in the image; projecting, based on the depth parameter, a preset average body height parameter onto the two-dimensional plane to obtain a projected height; and using a product of the projected height and a preset second proportion as the foot lift-off threshold.

In an embodiment in the disclosure, determining, based on the ground contact state of the foot of the human body at the second moment and the three-dimensional coordinates of the foot keypoint at the first moment and the second moment, the position offset of the root node of the avatar at the second moment includes: determining, based on the three-dimensional coordinates of the foot keypoint at the first moment and the second moment, three-dimensional coordinates of a midpoint of both feet at the first moment and the second moment respectively in response to determining that both feet of the human body in the image are in the ground contact state at the second moment, and using a difference between the three-dimensional coordinates of the midpoint of both feet at the first moment and the second moment as the position offset of the root node of the avatar at the second moment; determining, based on the position offset of the root node of the avatar at the first moment, the position offset of the root node of the avatar at the second moment in response to determining that both feet of the human body in the image are in the non-ground contact state at the second moment; using a difference between the three-dimensional coordinates of the foot keypoint of the first foot at the first moment and the second moment as the position offset of the root node of the avatar at the second moment in response to determining that a first foot of the human body in the image is in the ground contact state at the second moment and a second foot of the human body in the image is in the non-ground contact state at the second moment; and using a difference between the three-dimensional coordinates of the foot keypoint of the second foot at the first moment and the second moment as the position offset of the root node of the avatar at the second moment in response to determining that the second foot of the human body in the image is in the ground contact state at the second moment and the first foot of the human body in the image is in the non-ground contact state at the second moment.

In an embodiment in the disclosure, determining, based on the position offset of the root node of the avatar at the first moment, the position offset of the root node of the avatar at the second moment includes: using a product of the position offset of the root node of the avatar at the first moment and a preset penalty coefficient as the position offset of the root node of the avatar at the second moment.

In an embodiment in the disclosure, determining, based on the ground contact state of the foot of the human body at the second moment and the three-dimensional coordinates of the foot keypoint at the first moment and the second moment, the position offset of the root node of the avatar at the second moment further includes: determining a height of a virtual ground; and adjusting, based on the height of the virtual ground and the three-dimensional coordinates of the foot keypoint at the second moment, the position offset of the root node of the avatar at the second moment in response to determining that at least one of both feet of the human body is in the ground contact state at the second moment.

In an embodiment in the disclosure, determining the height of the virtual ground includes: obtaining a predetermined number of ground contact image frames, where at least one of both feet of the human body in the ground contact image frame is in the ground contact state; obtaining three-dimensional coordinates of a foot keypoint of the foot in the ground contact state in each of the predetermined number of ground contact image frames; using coordinate values in the vertical direction in the three-dimensional coordinates as ground heights corresponding to the respective ground contact image frames; and determining, based on the ground heights corresponding to the respective ground contact image frames, the height of the virtual ground.

In an embodiment in the disclosure, determining, based on the ground heights corresponding to the respective ground contact image frames, the height of the virtual ground includes: performing a sliding average on the ground heights corresponding to the respective ground contact image frames; and using an obtained sliding average value as the height of the virtual ground.

In an embodiment in the disclosure, adjusting, based on the height of the virtual ground and the three-dimensional coordinates of the foot keypoint at the second moment, the position offset of the root node of the avatar at the second moment includes: determining, based on the three-dimensional coordinates of the foot keypoint at the second moment, a minimum height of both feet at the second moment; determining, based on the height of the virtual ground, the minimum height of both feet at the second moment, and the position offset of the root node of the avatar at the second moment, a correction amount of the position offset of the root node of the avatar at the second moment; and adjusting, based on the correction amount, the position offset of the root node of the avatar at the second moment.

In an embodiment in the disclosure, determining, based on the height of the virtual ground, the minimum height of both feet at the second moment, and the position offset of the root node of the avatar at the second moment, the correction amount of the position offset of the root node of the avatar at the second moment includes: summing a component in the vertical direction of the position offset of the root node of the avatar at the second moment and the minimum height of both feet at the second moment to obtain a height difference; and using a difference between the height of the virtual ground and the height difference as the correction amount of the position offset of the root node of the avatar at the second moment.

In an embodiment in the disclosure, determining, based on the height of the virtual ground, the minimum height of both feet at the second moment, and the root node offset of the avatar at the second moment, the correction amount in the vertical direction of the root node offset of the avatar at the second moment includes: summing the component in the vertical direction of the position offset of the root node of the avatar at the second moment and the minimum height of both feet at the second moment to obtain a height difference; using a product of the height difference and a preset correction speed coefficient as a single frame correction amount; and using a difference between the height of the virtual ground and the single frame correction amount as the correction amount of the position offset of the root node of the avatar at the second moment.

In an embodiment in the disclosure, adjusting, based on the position offset, the position parameter of the root node of the avatar at the second moment includes: obtaining a position parameter of a root node of the human body at the second moment; and summing the position parameter of the root node of the human body at the second moment and the position offset to obtain an adjusted position parameter of the root node of the avatar at the second moment.

Based on the above method, an embodiment in the disclosure further provides an apparatus for driving an avatar, including:

an obtaining module configured to obtain three-dimensional coordinates of a foot keypoint of a human body in an image at a first moment and a second moment;

a projecting module configured to project the three-dimensional coordinates of the foot keypoint at the first moment and the second moment respectively onto a two-dimensional plane to obtain two-dimensional coordinates of the foot keypoint at the first moment and the second moment;

a ground contact detecting module configured to determine, based on the two-dimensional coordinates of the foot keypoint at the first moment and the second moment, a ground contact state of the foot of the human body at the second moment;

a position offset determining module configured to determine, based on the ground contact state of the foot of the human body at the second moment and the three-dimensional coordinates of the foot keypoint at the first moment and the second moment, a position offset of a root node of an avatar at the second moment; and

a position parameter adjusting module configured to adjust, based on the position offset, a position parameter of the root node of the avatar at the second moment.

An embodiment in the disclosure further provides an electronic device, including: a memory, a processor, and a computer program stored on the memory and executable on the processor, where the processor, when executing the computer program, implements the above method for driving an avatar.

An embodiment in the disclosure further provides a non-transitory computer-readable storage medium storing computer instructions, where the computer instructions are used to cause a computer to perform the above method for driving an avatar.

An embodiment in the disclosure further provides a computer program product, including computer program instructions that, when executed on a computer, cause the computer to perform the above method for driving an avatar.

## BRIEF DESCRIPTION OF THE DRAWINGS

To illustrate the technical solutions in the disclosure or in the related art more clearly, the drawings used in the description of the embodiments or the related art will be briefly described below. Apparently, the drawings in the following description show merely some embodiments in the disclosure, and a person of ordinary skill in the art may still derive other drawings from these drawings without creative efforts.

Fig. 1 is a schematic diagram of a three-dimensional full body driving scenario according to an embodiment in the disclosure;

Fig. 2 is a flowchart of a method for driving an avatar according to some embodiments in the disclosure;

Fig. 3 is a flowchart of a method for determining a ground contact state of a foot of a human body at a second moment according to some embodiments in the disclosure;

Fig. 4 is a flowchart of a method for determining the ground contact state of the foot of the human body at the second moment based on a moving speed of a foot keypoint on a two-dimensional plane according to some embodiments in the disclosure;

Fig. 5 is a flowchart of a method for foot ground contact state correction according to some embodiments in the disclosure;

Fig. 6 is a flowchart of a method for determining whether the foot of the human body in an image is off the ground according to some embodiments in the disclosure;

Fig. 7 is a flowchart of a method for determining a position offset of a root node of an avatar at the second moment according to some embodiments in the disclosure;

Fig. 8 is a flowchart of a method for correcting the position offset of the root node of the avatar at the second moment according to some embodiments in the disclosure;

Fig. 9 is a flowchart of a method for adjusting the position offset of the root node of the avatar at the second moment based on a height of a virtual ground and three-dimensional coordinates of the foot keypoint at the second moment according to some embodiments in the disclosure;

Fig. 10 is a schematic diagram of an internal structure of an apparatus for driving an avatar according to some embodiments in the disclosure; and

Fig. 11 is a schematic diagram of a more specific hardware structure of an electronic device according to some embodiments in the disclosure.

## DETAILED DESCRIPTION

In order to make the objectives, technical solutions and advantages of the disclosure clearer, the disclosure will be further described in detail below with reference to specific embodiments and drawings.

It should be noted that unless otherwise defined, the technical or scientific terms used in the embodiments in the disclosure shall have general meanings as understood by those of ordinary skill in the art to which the disclosure pertains. "First", "second" and like words used in the embodiments in the disclosure do not represent any order, quantity or importance, but are merely used to distinguish between different components. "Comprise" or "include" or like words mean that an element or item preceding the term encompasses an element or item or its equivalent listed after the term, without excluding other elements or items. "Connect" or "connected" or like words are not limited to a physical or mechanical connection, but may include an electrical connection, whether direct or indirect. "Up", "down", "left", "right" and the like are only used to represent a relative positional relationship, and the relative positional relationship may change accordingly when an absolute position of the described object changes.

It may be understood that before using the technical solutions in the embodiments in the disclosure, the user will be informed of the type, range of use, use scenarios, etc., of involved personal information in an appropriate manner, and the authorization of the user will be obtained.

For example, in response to receiving an active request from a user, prompt information is sent to the user to clearly inform the user that the requested operation will require access to and use of personal information of the user. As such, the user may independently choose, based on the prompt information, whether to provide the personal information to software or hardware, such as an electronic device, an application, a server, or a storage medium, that performs the operations of the technical solutions in the disclosure.

As an optional but non-limiting implementation, in response to receiving the active request from the user, the prompt information may be sent to the user in the form of, for example, a pop-up window, in which the prompt information may be presented in text. Furthermore, the pop-up window may also include a selection control for the user to select whether to "agree" or "disagree" to provide the personal information to the electronic device.

It may be understood that the above process of notifying and obtaining user authorization is only illustrative and does not constitute a limitation on the implementations in the disclosure, and other manners that satisfy relevant laws and regulations may also be applied in the implementations in the disclosure.

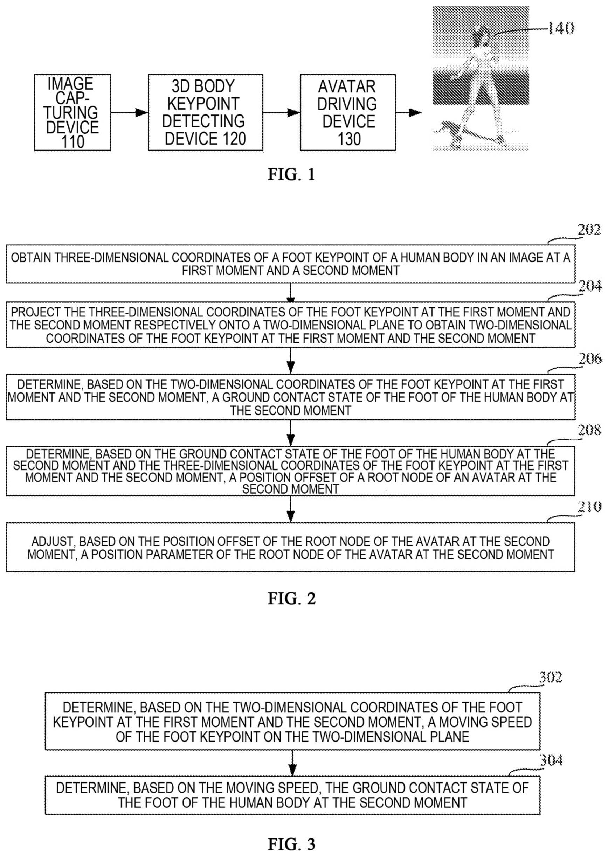

Fig. 1 is a schematic diagram of a three-dimensional (3D) full body driving scenario according to an embodiment in the disclosure. In the scenario shown in Fig. 1, a user may first acquire an image containing a human body via an image capturing device 110. The image mentioned above usually refers to a video containing a plurality of image frames. Next, the image capturing device 110 may transmit the captured image to a 3D body keypoint detecting device 120, and the 3D body keypoint detecting device 120 processes the received image to obtain 3D information of respective keypoints of the human body at respective moments. Further, the 3D body keypoint detecting device 120 outputs the 3D information of the respective keypoints of the human body at the respective moments to an avatar driving device 130, and the avatar driving device 120 generates, in a right-handed coordinate system based on the 3D information of the respective keypoints of the human body at the respective moments, an avatar 140 that may move with the movement of the human body.

Generally, the 3D body keypoint detecting device 120 may include a 3D body keypoint detection model. The 3D body keypoint detection model is generally configured to detect keypoints of the human body in the image, and output 3D information of the respective keypoints of the human body at the respective moments. Thereafter, the avatar driving device 120 further drives various actions of the avatar based on the 3D information of the respective keypoints of the human body at the respective moments output by the 3D body keypoint detection model.

As mentioned above, in the 3D full body driving scenario, since the 3D coordinates of the respective keypoints and the position parameters of the root node in the 3D information of the body keypoints output by the 3D body keypoint detection model are usually inaccurate and unstable, especially the coordinates in the depth direction are inaccurate or unstable, the avatar may slide, float above the ground, or sink into the ground in the process of movement, which seriously affects the user experience.

To address the above issue, an embodiment in the disclosure provides a method for driving an avatar. In the method, firstly, obtained 3D coordinates of a foot keypoint of the human body are projected onto a two-dimensional plane to obtain two-dimensional coordinates so as to eliminate the disturbance of the coordinates in the depth direction; then, ground contact detection of the foot of the human body is performed based on the two-dimensional coordinates obtained via projection to determine a ground contact state of the foot of the human body; and finally, the position of the root node of the avatar driven by the human body is adjusted based on the ground contact state of the foot of the human body, thereby achieving the purpose of stably placing the foot in the ground contact state on the ground, and preventing the avatar from sliding or the foot of the avatar from sinking into the ground in the process of movement, and achieving a realistic ground-contact sensation for the avatar.

Fig. 2 is a flowchart of a method for driving an avatar according to an embodiment in the disclosure. In an embodiment in the disclosure, the method for driving an avatar may be performed by the avatar driving device 130. As shown in Fig. 2, the method for driving an avatar according to the embodiment in the disclosure may include the following steps.

In step 202, 3D coordinates of a foot keypoint of a human body in an image at a first moment and a second moment are obtained.

In step 204, the 3D coordinates of the foot keypoint at the first moment and the second moment are projected respectively onto a two-dimensional plane to obtain two-dimensional coordinates of the foot keypoint at the first moment and the second moment.

In step 206, a ground contact state of the foot of the human body at the second moment is determined based on the two-dimensional coordinates of the foot keypoint at the first moment and the second moment.

In step 208, a position offset of a root node of an avatar at the second moment is determined based on the ground contact state of the foot of the human body at the second moment and the 3D coordinates of the foot keypoint at the first moment and the second moment.

In step 210, a position parameter of the root node of the avatar at the second moment is adjusted based on the position offset of the root node of the avatar at the second moment.

Hereinafter, the respective steps of the method for driving an avatar will be described in detail with reference to the drawings and specific examples.

As mentioned above, in the 3D full body driving scenario, the 3D body keypoint detection model in the 3D body keypoint detecting device 120 may perform body keypoint detection on the image containing the human body captured by the image capturing device 110, and output 3D information of the respective keypoints of the human body at the respective moments.

A person skilled in the art may understand that the body keypoints may include head keypoints, neck keypoints, shoulder keypoints, arm keypoints, hand keypoints, hip keypoints, leg keypoints, foot keypoints, and the like of the human body. The detected keypoints of the human body will be in one-to-one correspondence with keypoints on the limbs of the avatar driven by the human body.

In addition, it may be understood that the keypoints of the human body may form a tree structure. Generally, one of the keypoints of the human body may be predefined as the root node of the tree, for example, a hip keypoint among the body keypoints may be defined as the root node of the tree, and the other keypoints may be defined as child nodes of the root node or child nodes of other child nodes. Generally, information such as the position and the rotation posture in the right-handed coordinate system of the keypoints on the limbs of the avatar may be determined based on the 3D information of the root node.

In some embodiments, the 3D information of the respective keypoints of the human body at the respective moments output by the 3D body keypoint detection model may include: a quaternion and 3D coordinates of each keypoint at each moment. The 3D information of the respective keypoints of the human body at the respective moments may further include: a position parameter of the root node at each moment. The quaternion represents the quaternion of each keypoint relative to the root node; the 3D coordinates represent the relative coordinates of each keypoint relative to the root node;

and the position parameter of the root node represents the absolute coordinates of the root node in the right-handed coordinate system. In this way, when the position parameter of the root node of the avatar is determined, the absolute position of each keypoint in the right-handed coordinate system may be obtained based on the 3D coordinates of the respective keypoints. Based on this, it may be understood that when the 3D information of the body keypoints at a certain moment output by the 3D body keypoint detection model is inaccurate or unstable, the avatar may slide, float above the ground, or sink into the ground.

Based on the above, in step 202, the 3D coordinates of the foot keypoint of the human body in the image will be obtained first. As mentioned above, the 3D coordinates of the foot keypoint of the human body in the image are included in the 3D information of the respective keypoints of the human body at the respective moments output by the 3D body keypoint detection model, and therefore, the 3D coordinates of the foot keypoint of the human body may be directly extracted from the 3D information of the respective keypoints of the human body at the respective moments output by the 3D body keypoint detection model.

In addition, it may be understood that generally, the human body has two feet: a left foot and a right foot. For ease of description, only one of the two feet of the human body is distinguished from the other, and the specific directions of left or right are not distinguished, in an embodiment in the disclosure, the left foot may be referred to as a first foot, and the right foot may be referred to as a second foot. It should be noted that, without loss of generality, the right foot may also be referred to as the first foot, and the left foot may be referred to as the second foot. The embodiment in the disclosure does not limit which foot the first foot is. In addition, it may be understood that in an embodiment in the disclosure, one or more keypoints may usually be provided on each foot of the human body. The one or more keypoints provided on the foot may be regarded as the foot keypoint according to the embodiments in the disclosure, and the embodiments in the disclosure do not limit which specific position on the foot the keypoint is located.

In addition, it should be noted that in the embodiments in the disclosure, the first moment and the second moment may refer to moments corresponding to two consecutive processed images. Generally, the first moment usually refers to the moment preceding the second moment. In some examples, the first moment may also be described as the moment t-1 or the preceding moment, and the second moment may be described as the moment t+1 or the current moment. Moreover, since the method according to the embodiments in the disclosure is repeatedly performed for each moment corresponding to an image frame, when time moves to the moment following the second moment and the method needs to be performed again, the moment preceding the current moment (that is, the original second moment) may be used as a new first moment, and the current moment (that is, the moment following the original second moment) may be used as a new second moment.

Regarding step 204, specifically, the 3D coordinates of the foot keypoint at the first moment and the second moment may be respectively projected onto a two-dimensional plane formed by a horizontal direction and a vertical direction. In the right-handed coordinate system, the two-dimensional plane is a plane formed by an X-axis and a Y-axis. In an embodiment in the disclosure, the two-dimensional plane formed by the horizontal direction and the vertical direction may also be referred to as a UV plane. How to project the 3D coordinates onto the UV plane may be determined based on the specific form of the 3D information of the respective keypoints of the human body at the respective moments output by the 3D body keypoint detection model, which is not limited in the embodiments in the disclosure. In an embodiment in the disclosure, the two-dimensional coordinates obtained after the projection may also be referred to as UV coordinates of the keypoint.

Regarding step 206, the ground contact state of the foot of the human body at the second moment may be determined based on the two-dimensional coordinates of the foot keypoint at the first moment and the second moment by a variety of methods.

Fig. 3 is a flowchart of a method for determining the ground contact state of the foot of the human body at the second moment according to some embodiments in the disclosure. As shown in Fig. 3, the method may include the following steps.

In step 302, a moving speed of the foot keypoint on the two-dimensional plane is determined based on the two-dimensional coordinates of the foot keypoint at the first moment and the second moment.

Specifically, in some embodiments, a moving distance of the foot keypoint on the two-dimensional plane from the first moment to the second moment may be determined first based on the two-dimensional coordinates of the foot keypoint at the first moment and the second moment; then, a moving distance of the foot keypoint per unit time is determined based on a difference between the first moment and the second moment and the moving distance; and finally, the moving distance per unit time is used as the moving speed of the foot keypoint.

In step 304, the ground contact state of the foot of the human body at the second moment is determined based on the moving speed.

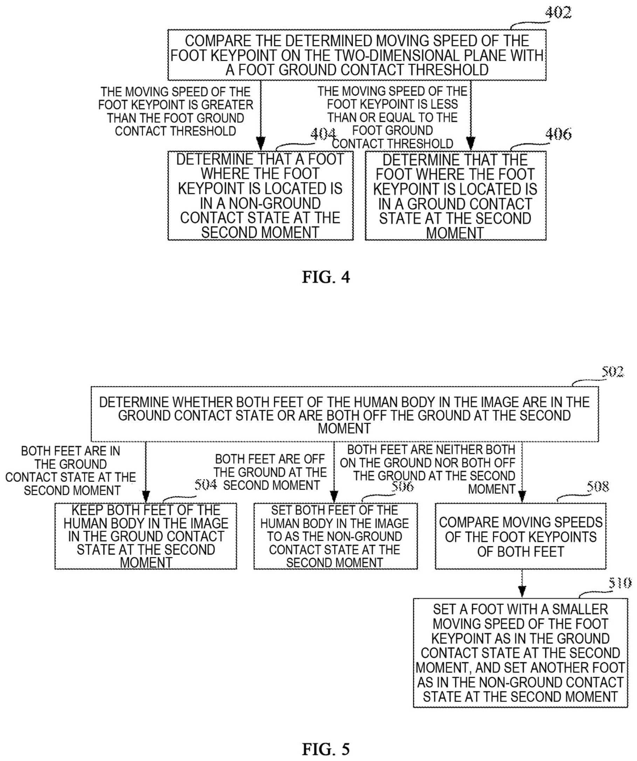

Specifically, in some embodiments, a specific implementation of determining, based on the moving speed of the foot keypoint on the two-dimensional plane, the ground contact state of the foot of the human body at the second moment according to step 304 may be shown in Fig. 4, which specifically includes the following steps.

In step 402, the determined moving speed of the foot keypoint on the two-dimensional plane is compared with a foot ground contact threshold.

In step 404, in response to determining that the moving speed of the foot keypoint is greater than the foot ground contact threshold, it is determined that a foot where the foot keypoint is located is in a non-ground contact state at the second moment.

In step 406, in response to determining that the moving speed of the foot keypoint is less than or equal to the foot ground contact threshold, it is determined that the foot where the foot keypoint is located is in a ground contact state at the second moment.

In the above method, the ground contact state of the foot may be detected based on the relationship between the moving speed of the foot and the foot ground contact threshold. The foot is determined as in the non-ground contact state when the moving speed of the foot is high, and the foot is determined as in the ground contact state when the moving speed of the foot is low.

However, in an embodiment in the disclosure, the moving speed of the foot is the moving speed on the two-dimensional plane after being projected onto the two-dimensional plane, and the speed is not only related to the actual moving speed of the foot of the human body, but also related to the resolution of the image and the position (that is, depth) of the human body in the image. Therefore, it may be understood that in an embodiment in the disclosure, if a fixed foot ground contact threshold is used to determine the foot ground contact state, a significant error may be brought. In view of the above situation, in some embodiments in the disclosure, before the method shown in Fig. 4 is performed, a depth parameter of the human body in the image may be acquired first, and then the foot ground contact threshold is determined based on the depth parameter. Specifically, the depth parameter usually refers to the coordinate value of the human body in the depth direction of the right-handed coordinate system, that is, the Z direction. In some embodiments, the depth parameter may be determined according to the coordinate value in the Z direction in the position parameter of the root node. In addition, when determining the foot ground contact threshold based on the depth parameter, a preset average body height parameter may be projected onto the two-dimensional plane based on the depth parameter to obtain a projected height; then, a product of the projected height and a preset first proportion is used as the foot ground contact threshold. For example, the average body height parameter may be set to 1.7m, and the first proportion may be set to 10%. In this way, the foot ground contact threshold is 10% of the projected height obtained by projecting the height of 1.7m onto the two-dimensional plane based on the depth parameter of the human body in the captured image. It should be noted that the above average body height parameter and the specific values of the second proportion are only examples, and the embodiments in the disclosure are not limited to the above values. Through the flexible setting manner of the foot ground contact threshold based on the depth information of the human body in the image, the set foot ground contact threshold may adapt to images of different sizes or resolutions, and may also adapt to postures of the human body at different distances, and therefore, a high accuracy may be obtained in the determination of the foot ground contact state based on the foot ground contact threshold set in the above manner.

In addition, it should be noted that, as mentioned above, there may be more than one foot keypoint on each foot of the human body. In this case, in an embodiment in the disclosure, the above ground contact state detection may be performed respectively according to the plurality of foot keypoints of each foot, and the ground contact state of the foot may be determined according to a plurality of obtained ground contact states. For example, in some examples, if at least one of the plurality of ground contact states obtained is the ground contact state, it may be determined that the foot is in the ground contact state. Certainly, other determination strategies may be adopted according to actual application conditions, which is not limited in the present disclosure.

Experiments have proved that the above ground contact detection strategy has high robustness in most cases. However, in the case where the foot quickly switches between the ground contact state and the non-ground contact state, such as when the human body moves quickly in a small amplitude, the stability is poor. This is mainly because the moving speed of both feet is always fast during a quick movement, and through the above ground contact detection method, it is usually concluded that both feet are always in the non-ground contact state, and the ground contact state of the foot is basically impossible to be determined, which ultimately leads to the visual floating state of the driven avatar.

To address such a problem, in other embodiments in the disclosure, the foot ground contact state is further corrected on the basis of the solution shown in Fig. 4. Specifically, after steps 402 to 406 are performed, the following foot ground contact state correction method shown in Fig. 5 may be further performed.

In step 502, it is determined whether both feet of the human body in the image are in the ground contact state or are both off the ground at the second moment.

In step 504, in response to determining that both feet of the human body in the image are in the ground contact state at the second moment, both feet of the human body in the image are kept in the ground contact state at the second moment.

In step 506, in response to determining that both feet of the human body in the image are off the ground at the second moment, both feet of the human body in the image are set to be in the non-ground contact state at the second moment.

In step 508, in response to determining that both feet of the human body in the image are neither both on the ground nor both off the ground at the second moment, the moving speeds of the foot keypoints of both feet are compared, and then step 510 is executed.

In step 510, a foot with a smaller moving speed of the foot keypoint is set as in the ground contact state at the second moment, and another foot is set as in the non-ground contact state at the second moment.

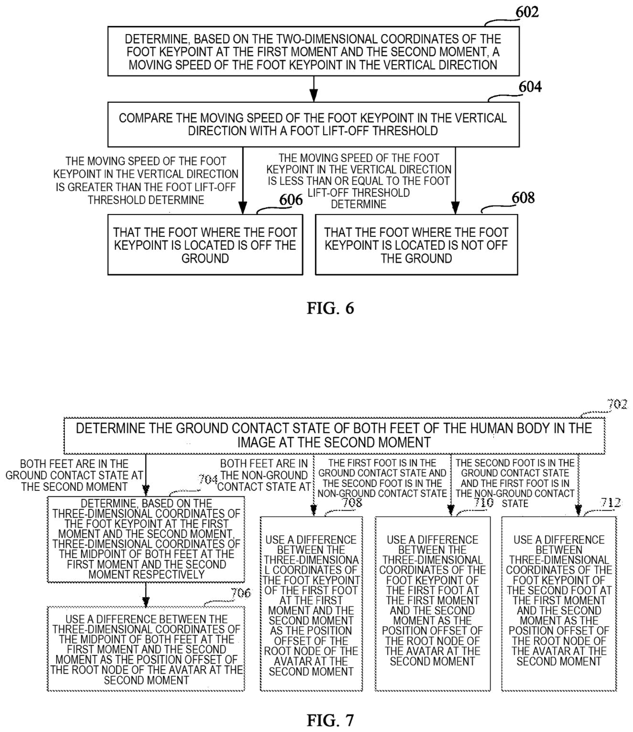

In an embodiment in the disclosure, the method for determining whether the foot of the human body in the image is off the ground according to step 502 may be shown in Fig. 6, which includes the following steps.

In step 602, a moving speed of the foot keypoint in the vertical direction is determined based on the two-dimensional coordinates of the foot keypoint at the first moment and the second moment.

Specifically, the moving speed of the foot keypoint in the vertical direction refers to a moving distance of the foot keypoint in the vertical direction per unit time. The moving distance may be determined according to the difference between the two-dimensional coordinates at the first moment and the second moment in the vertical direction, that is, the Y direction. The moving time may be determined by the difference between the first moment and the second moment.

In step 604, the moving speed of the foot keypoint in the vertical direction is compared with the foot lift-off threshold.

Similarly, similar to the foot ground contact threshold mentioned above, due to the difference in the resolution of the input image and the position of the human body in the image, if a fixed foot lift-off threshold is used to determine whether the foot is off the ground, a great error may also be brought. In view of this situation, in some embodiments in the disclosure, the depth parameter of the human body in the image may be acquired first, and then the foot lift-off threshold is dynamically determined based on the depth parameter. Similarly, when determining the foot lift-off threshold based on the depth parameter, a preset average body height parameter may be projected onto the two-dimensional plane based on the depth parameter to obtain a projected height; then, a product of the projected height and a preset second proportion is used as the foot lift-off threshold. For example, the average body height parameter may also be set to 1.7m, and the second proportion may be set to 6%. In this way, the foot lift-off threshold is 6% of the projected height obtained by projecting the height of 1.7m onto the two-dimensional plane based on the depth parameter of the human body in the captured image. It should be noted that the above average body height parameter and the specific values of the second proportion are only examples, and the embodiments in the disclosure are not limited to the above values. It may be seen that through the flexible setting manner of the foot lift-off threshold, the set foot lift-off threshold may adapt to images of different sizes or resolutions, and may also adapt to postures of the human body at different distances, and therefore, a high accuracy may be obtained in the determination on whether the foot is off the ground based on the foot lift-off threshold set in the above manner.

In step 606, in response to determining that the moving speed of the foot keypoint in the vertical direction is greater than the foot lift-off threshold, it is determined that the foot where the foot keypoint is located is off the ground.

In step 608, in response to determining that the moving speed of the foot keypoint in the vertical direction is less than or equal to the foot lift-off threshold, it is determined that the foot where the foot keypoint is located is not off the ground.

In addition, it should be noted that, as mentioned above, there may be more than one foot keypoint on each foot of the human body. In this case, in an embodiment in the disclosure, the above determination on whether the foot is off the ground may be performed respectively according to the plurality of foot keypoints of each foot, and whether the foot is off the ground may be determined according to the obtained determination results. For example, in some examples, if the determination results of whether the foot is off the ground obtained according to the plurality of foot keypoints of the foot are all off the ground, it may be determined that the foot is off the ground. Certainly, other determination strategies may be adopted according to actual application conditions, which is not limited in the present disclosure.

Whether a certain foot of the human body is off the ground may be determined through the method shown in Fig. 6, and therefore, after the above determination is performed on both feet of the human body respectively, whether both feet of the human body are off the ground may be determined.

It may be seen that through the foot ground contact state correction method shown in Fig. 5, in the case where the human body in the image is not with both feet off the ground, at least one foot of the human body may be set as in the ground contact state, thereby generating an accurate, stable and continuous ground contact state, and further effectively avoiding the problem that the avatar is visually floating due to the inability to determine the ground contact state of the foot when the human body moves quickly in a small amplitude.

Regarding step 208, in an embodiment in the disclosure, the position offset of the root node of the avatar at the second moment may be determined by a variety of methods.

In an embodiment in the disclosure, the position offset of the root node of the avatar at the second moment refers to an offset between the position parameter of the root node of the avatar at the second moment output by the 3D body keypoint detection model obtained through prediction and the actual position parameter of the root node of the avatar at the second moment. If the prediction of the position offset is accurate, the position parameter of the root node of the avatar at the second moment may be close to a true value after the position parameter of the root node of the avatar at the second moment is compensated based on the position offset, thereby effectively preventing the avatar from sliding, floating or sinking.

Specifically, Fig. 7 is a flowchart of a method for determining the position offset of the root node of the avatar at the second moment according to some embodiments in the disclosure. As shown in Fig. 7, the method may include the following steps.

In step 702, the ground contact state of both feet of the human body in the image at the second moment is determined.

If both feet of the human body in the image are in the ground contact state at the second moment, step 704 is executed.

If both feet of the human body in the image are in the non-ground contact state at the second moment, step 708 is executed.

If the first foot of the human body in the image is in the ground contact state at the second moment and the second foot of the human body in the image is in the non-ground contact state at the second moment, step 710 is executed.

If the second foot of the human body in the image is in the ground contact state at the second moment and the first foot of the human body in the image is in the non-ground contact state at the second moment, step 712 is executed.

In step 704, three-dimensional coordinates of the midpoint of both feet at the first moment and the second moment are determined based on the three-dimensional coordinates of the foot keypoint at the first moment and the second moment respectively, and then step 706 is executed.

In an embodiment in the disclosure, the three-dimensional coordinates of the midpoint of both feet at a certain moment may be obtained by averaging the three-dimensional coordinates of the foot keypoints of both feet at that moment.

In step 706, a difference between the three-dimensional coordinates of the midpoint of both feet at the first moment and the second moment is used as the position offset of the root node of the avatar at the second moment.

In step 708, the position offset of the root node of the avatar at the second moment is determined based on the position offset of the root node of the avatar at the first moment.

Specifically, in an embodiment in the disclosure, a product of a root node offset of the avatar at the first moment and a preset penalty coefficient may be used as a root node offset of the avatar at the second moment. In some specific examples, the penalty coefficient may be set to a real number less than 1, for example, 0.99.

In step 710, a difference between the three-dimensional coordinates of the foot keypoint of the first foot at the first moment and the second moment is used as the position offset of the root node of the avatar at the second moment.

In step 712, a difference between the three-dimensional coordinates of the foot keypoint of the second foot at the first moment and the second moment is used as the position offset of the root node of the avatar at the second moment.

It may be seen that through the above method, the position offset of the root node of the avatar may be determined based on the 3D coordinates of the foot keypoint in the ground contact state, and therefore, the accuracy of the position offset of the root node of the avatar may be ensured. The above method mainly calculates the position offset of the root node from the horizontal direction, that is, the X direction, and finally compensates the position offset to the root node, thereby effectively alleviating the sliding of the avatar.

In addition, in the above method, in the case where neither foot is on the ground, determining the position offset of the root node of the avatar at the second moment based on the position offset of the root node of the avatar at the first moment may keep the continuity of the predicted position of the root node when the feet are not on the ground. Further, by increasing the penalty coefficient, it may prevent the lateral error accumulation in the position parameter of the root node of the avatar, which may lead to the avatar gradually moving out of the picture.

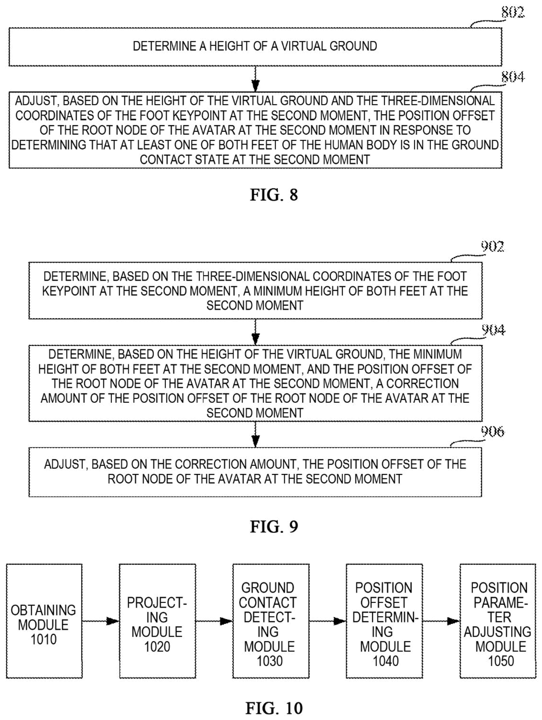

In addition, considering that when the foot of the human body switches from the non-ground contact state to the ground contact state, if an error occurs in the height information in the position parameter of the root node of the avatar, it will cause a height change of the plane where the foot of the avatar is located when the foot is on the ground, thus causing the foot of the avatar to sink or float. To address the above problem, in other embodiments in the disclosure, on the basis of the method shown in Fig. 7, a method for correcting the position offset of the root node of the avatar at the second moment shown in Fig. 8 is further added. As shown in Fig. 8, the method may include the following steps.

In step 802, a height of a virtual ground is determined.

In step 804, in response to determining that at least one of both feet of the human body is in a ground contact state at the second moment, the position offset of the root node of the avatar at the second moment is adjusted based on the height of the virtual ground and the three-dimensional coordinates of the foot keypoint at the second moment.

Specifically, in an embodiment in the disclosure, determining the height of the virtual ground in step 802 may include: first, obtaining a predetermined number of ground contact image frames; then, obtaining three-dimensional coordinates of the foot keypoint of the foot in the ground contact state in each of the predetermined number of ground contact image frames, and using coordinate values in the vertical direction in the three-dimensional coordinates as ground heights corresponding to the respective ground contact image frames; and finally, determining the height of the virtual ground based on the ground heights corresponding to the respective ground contact image frames.

In an embodiment in the disclosure, at least one of both feet of the human body in the ground contact image frame is in the ground contact state. That is, in an embodiment in the disclosure, an image frame in which at least one of both feet of the human body is in the ground contact state is referred to as a ground contact image frame.

In addition, in an embodiment in the disclosure, the predetermined number may be set according to actual requirements, for example, it may be set to 60 or other values.

In step 802, for the predetermined number of ground contact image frames, a coordinate value in the Y direction, that is, a height value of the foot keypoint of the foot in the ground contact state in the vertical direction, in the three-dimensional coordinates of the foot keypoint may be extracted as the ground height corresponding to the respective ground contact image frames.

In an embodiment in the disclosure, the height of the virtual ground may be determined by averaging or sliding averaging the ground heights corresponding to the respective ground contact image frames. The sliding average method may specifically include: first, setting a sliding window width and a weight value corresponding to each element in the sliding window; then, placing the sliding window at the beginning of a sequence composed of the ground heights corresponding to the predetermined number of ground contact image frames; next, calculating a weighted average value of the elements in the sliding window, replacing the last element in the sliding window with the calculated average value, and sliding the sliding window to the next group of elements; and repeating the above calculation and sliding steps until the last element in the sequence is reached. The final weighted average value may be considered as the height of the virtual ground. For example, assuming that the width of the sliding window is 2 and the weight values of the two elements in the window are 0.7 and 0.3, for the sequence {a1, a2, ..., an} composed of the ground heights corresponding to the predetermined number of ground contact image frames, the sliding window is first set at the beginning [a1, a2] of the sequence, and the weighted average value of the two elements a1 and a2 in the window is calculated as a2'=a1*0.7+a2*0.3; then, the value of a2 in the sequence is replaced with the weighted average value a2', and the sliding window is moved to [a2', a3]; then, the weighted average value of the two elements a2' and a3 in the window is calculated as a3'=a2'*0.7+a3*0.3; then, the value of a3 in the sequence is replaced with the weighted average value a3', and the sliding window is moved to [a3', a4]; ...; the above process is repeated until the sliding window is moved to [a(n-1)', an]. At this time, the weighted average value of the two elements a(n-1)' and an in the window is calculated as an'=a(n-1)'*0.7+ an*0.3. Finally, the calculated weighted average value an' is the height of the virtual ground.

Regarding step 804, in an embodiment in the disclosure, the position offset of the root node of the avatar at the second moment may be adjusted based on the height of the virtual ground and the three-dimensional coordinates of the foot keypoint at the second moment by the method shown in Fig. 9. The method may specifically include the following steps.

In step 902, the minimum height of both feet at the second moment is determined based on the three-dimensional coordinates of the foot keypoint at the second moment.

In step 904, the correction amount of the position offset of the root node of the avatar at the second moment is determined based on the height of the virtual ground, the minimum height of both feet at the second moment, and the position offset of the root node of the avatar at the second moment.

In step 906, the position offset of the root node of the avatar at the second moment is adjusted based on the correction amount.

Specifically, step 904 may include: first, summing a component in the vertical direction of the position offset of the root node of the avatar at the second moment and the minimum height of both feet at the second moment to obtain a height difference; and then, using a difference between the height of the virtual ground and the height difference as the correction amount of the position offset of the root node of the avatar at the second moment.

Specifically, it is assumed that the height of the virtual ground is represented by $h_{ground}$; the minimum height of both feet at the second moment is represented by $h_t$; and the position offset of the root node of the avatar at the second moment is represented by $offset_t$. The position offset $offset_t$ of the root node of the avatar at the second moment includes components in three directions (x, y, z), and $offset_{t.y}$ represents the component in the vertical direction of the position offset of the root node of the avatar at the second moment. In an embodiment in the disclosure, the correction amount $diff_{ground}$ of the position offset of the root node of the avatar at the second moment may be determined by the following calculation expression (1):

$$diff_{ground} = h_{ground} - \left(h_t + offset_{t.y}\right) \ (1)$$

In this way, in step 906, the position offset of the root node of the avatar at the second moment may be adjusted by the following calculation expression (2):

$$offset_{t.y} = offset_{t.y} + diff_{ground} \ (2)$$

To avoid the jitter or discontinuous ground contact of the avatar caused by an excessively large correction amount, a correction speed coefficient $v_{ground}$ may be further set. In this case, step 904 may include: first, summing the component in the vertical direction of the position offset of the root node of the avatar at the second moment and the minimum height of both feet at the second moment to obtain a height difference; then, using a product of the height difference and a preset correction speed coefficient as a single frame correction amount; and finally, using a difference between the height of the virtual ground and the single frame correction amount as the correction amount of the position offset of the root node of the avatar at the second moment. That is, in the above embodiment, the correction amount $diff_{ground}$ of the position offset of the root node of the avatar at the second moment may be determined by the following calculation expression (3):

$$diff_{ground} = h_{ground} - \left(h_t + offset_{t.y}\right) \times v_{ground} \ (3)$$

Regarding step 210, specifically, the position parameter of the root node of the avatar at the second moment may be adjusted based on the position offset by the following method. First, the position parameter of the root node of the human body at the second moment is obtained. As mentioned above, the position parameter of the root node of the human body at the second moment may be directly extracted from the 3D information of the body keypoints output by the 3D body keypoint detection model. Next, the position parameter of the root node of the human body at the second moment is summed with the position offset to obtain the adjusted position parameter of the root node of the avatar at the second moment.

It may be seen that through the above method, the position offset of the root node of the human body may be determined based on the ground contact state of both feet of the human body, and the position parameter of the root node of the human body may be adjusted based on the determined position offset, thereby achieving the purpose of preventing the avatar from sliding, floating or sinking.

Specifically, as mentioned above, the sliding, floating or sinking of the avatar is mostly due to the inaccuracy or instability of the 3D information of the body keypoints output by the 3D body keypoint detection model. The inaccuracy or instability of the 3D information of the body keypoints output by the 3D body keypoint detection model is mainly reflected in the depth direction, that is, the Z direction. Therefore, in an embodiment in the disclosure, projecting the 3D coordinates of the foot keypoint to more stable and accurate two-dimensional coordinates, that is, UV coordinates, may effectively avoid the disturbance in the Z direction, thereby accurately determining the ground contact state of the foot of the human body. After the ground contact state of the foot of the human body is determined, the position of the ground contact foot may be kept stable by moving the root node, thereby achieving a realistic ground-contact sensation for the avatar.

Further, the above method may further introduce the error accumulation in the ground contact height, and by establishing the virtual ground and further correcting the position offset of the root node in the vertical direction, the foot may be further effectively prevented from sinking or floating. The lateral error accumulation during continuous jumping may be solved by increasing the lateral penalty coefficient.

It may be seen that the above solution is simple and direct, and while achieving stable ground contact of the foot, it may also effectively avoid phenomena such as discontinuity and jumping of the leg posture.

Corresponding to the above method, an embodiment in the disclosure further discloses an apparatus for driving an avatar, an internal structure of which may be shown in Fig. 10 and include:

an obtaining module 1010 configured to obtain three-dimensional coordinates of a foot keypoint of a human body in an image at a first moment and a second moment;

a projecting module 1020 configured to project the three-dimensional coordinates of the foot keypoint at the first moment and the second moment respectively onto a two-dimensional plane to obtain two-dimensional coordinates of the foot keypoint at the first moment and the second moment;

a ground contact detecting module 1030 configured to determine, based on the two-dimensional coordinates of the foot keypoint at the first moment and the second moment, a ground contact state of the foot of the human body at the second moment;

a position offset determining module 1040 configured to determine, based on the ground contact state of the foot of the human body at the second moment and the three-dimensional coordinates of the foot keypoint at the first moment and the second moment, a position offset of a root node of an avatar at the second moment; and

a position parameter adjusting module 1050 configured to adjust, based on the position offset, a position parameter of the root node of the avatar at the second moment.

Reference may be made to the above method and drawings for the specific implementation of each module, and details are not repeated herein. For the convenience of description, when describing the above apparatus, the functions are divided into various modules for description. Certainly, when implementing the present disclosure, the functions of the modules may be implemented in one or more pieces of software and/or hardware. The apparatus in the above embodiment is configured to implement the corresponding method for driving an avatar in any one of the above embodiments, and has the beneficial effects of the corresponding method embodiment, which are not repeated herein.

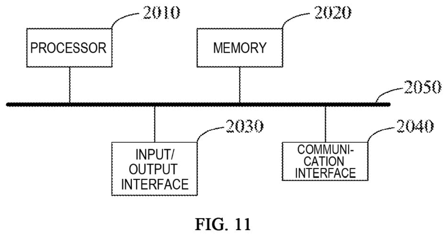

Fig. 11 is a schematic diagram of a more specific hardware structure of an electronic device according to an embodiment. The device may include: a processor 2010, a memory 2020, an input/output interface 2030, a communication interface 2040, and a bus 2050. The processor 2010, the memory 2020, the input/output interface 2030, and the communication interface 2040 are communicatively connected to each other within the device through the bus 2050.

The processor 2010 may be implemented using a general-purpose central processing unit (CPU), a microprocessor, an application specific integrated circuit (ASIC), or one or more integrated circuits, etc., for executing related programs, to implement the technical solutions provided in the embodiments of the specification.

The memory 2020 may be implemented in the form of a read-only memory (ROM), a random access memory (RAM), a static storage device, a dynamic storage device, etc. The memory 2020 may store an operating system and other applications, and when implementing the technical solutions provided in the embodiments of the specification by means of software or firmware, the related program code is stored in the memory 2020 and called by the processor 2010 for execution.

The input/output interface 2030 is configured to connect to an input/output device to enable information input and output. The input/output device may be configured as a component in the device, or it may be external to the device to provide a corresponding function. The input device may include a microphone, various sensors, etc., and the output device may include a display, a speaker, a vibrator, an indicator light, etc.

The communication interface 2040 is configured to connect to a communication module (not shown) to enable communication interaction between the device and other devices. The communication module may communicate in a wired (e.g., a USB, a network cable, etc.), or wireless (e.g., a mobile network, Wi-Fi, Bluetooth, etc.) manner.

The bus 2050 includes a path for transferring information between the components (for example, the processor 2010, the memory 2020, the input/output interface 2030, and the communication interface 2040) of the device.

It should be noted that although only the processor 2010, the memory 2020, the input/output interface 2030, the communication interface 2040, and the bus 2050 are shown in the device, during a specific implementation, the device may further include other components necessary for proper operation. Additionally, it may be understood by those skilled in the art that the device may include only the components necessary to implement the solutions provided in the embodiments of the specification, and not necessarily include all of the components shown in the figure.

The electronic device in the above embodiment is configured to implement the corresponding method for driving an avatar in any one of the above embodiments, and has the beneficial effects of the corresponding method embodiment, which are not repeated herein.

Based on the same inventive concept, corresponding to the method in any one of the above embodiments, the disclosure further provides a non-transitory computer-readable storage medium storing computer instructions, where the computer instructions are used to cause a computer to perform the method for driving an avatar according to any one of the above embodiments.

In the method for driving an avatar and the related device, firstly, the 3D coordinates of the foot keypoint are projected to more stable and accurate two-dimensional coordinates, which may effectively avoid the disturbance in the depth direction, thereby accurately determining the ground contact state of the foot of the human body. Next, the method further adjusts the position of the root node of the avatar driven by the body movement based on the determined ground contact state of the foot of the human body, thereby achieving the purpose of stably placing the foot in the ground contact state on the ground, and preventing the avatar from sliding or the foot of the avatar from sinking into the ground in the process of movement, achieving a real stepping feeling of the avatar, and improving the user experience.

The computer-readable medium in this embodiment includes permanent and non-permanent, removable and non-removable media, and information storage may be implemented by using any method or technology. Information may be computer-readable instructions, data structures, modules of a program, or other data. Examples of the computer storage medium include, but are not limited to, a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storage, a cassette tape, tape or disk storage or other magnetic storage devices, or any other non-transmission media that may be used to store information that may be accessed by a computing device.

The computer instructions stored on the storage medium in the above embodiment are used to cause a computer to perform the task processing method according to any one of the above embodiments, and have the beneficial effects of the corresponding method embodiment, which are not repeated herein.

It should be understood by those of ordinary skill in the art that the discussion of any one of the above embodiments is only example, and is not intended to imply that the scope of the disclosure (including the claims) is limited to these examples; and with the concept in the disclosure, the technical features in the above embodiments or different embodiments may also be combined, steps may be implemented in any order, and there are many other changes in different aspects of the embodiments in the disclosure as described above, which are not provided in detail for the sake of simplicity.

In addition, to simplify description and discussion and avoid obscuring an understanding of the embodiments in the disclosure, well-known power/ground connections to an integrated circuit (IC) chip and other components may or may not be shown in the drawings that are provided. Furthermore, the apparatus may be shown in the form of a block diagram to avoid obscuring an understanding of the embodiments in the disclosure, and the following fact is also taken into account: details regarding the implementation of the apparatus in the form of block diagram are highly dependent upon a platform on which the embodiments in the disclosure are to be implemented (i.e., such details should be fully understood by those skilled in the art). Where the specific details (e.g., circuitry) are set forth to describe the example embodiments in the disclosure, it will be apparent to those skilled in the art that the embodiments in the disclosure may be implemented without these specific details or with variations to these specific details. These descriptions should therefore be considered illustrative rather than limiting.

Although the disclosure has been described with reference to the specific embodiments in the disclosure, many substitutions, modifications, and variations of these embodiments will be apparent to those of ordinary skill in the art from the foregoing description. For example, the discussed embodiments may be used for other memory architectures such as a dynamic RAM (DRAM).

The embodiments in the disclosure are intended to cover all such substitutions, modifications, and variations that fall within the broad scope of the appended claims. Therefore, any omissions, modifications, equivalent substitutions, improvements etc. made within the spirit and principle of the embodiments in the disclosure are intended to be included within the scope of protection of the present disclosure.

## Claims

1. A method for driving an avatar, comprising:

   obtaining three-dimensional coordinates of a foot keypoint of a human body in an image at a first moment and a second moment;
   projecting the three-dimensional coordinates of the foot keypoint at the first moment and the second moment respectively onto a two-dimensional plane to obtain two-dimensional coordinates of the foot keypoint at the first moment and the second moment;
   determining, based on the two-dimensional coordinates of the foot keypoint at the first moment and the second moment, a ground contact state of the foot of the human body at the second moment;
   determining, based on the ground contact state of the foot of the human body at the second moment and the three-dimensional coordinates of the foot keypoint at the first moment and the second moment, a position offset of a root node of an avatar at the second moment; and
   adjusting, based on the position offset, a position parameter of the root node of the avatar at the second moment.

2. The method of claim 1, wherein projecting the three-dimensional coordinates of the foot keypoint at the first moment and the second moment respectively onto the two-dimensional plane comprises:
   projecting the three-dimensional coordinates of the foot keypoint at the first moment and the second moment respectively onto the two-dimensional plane formed by a horizontal direction and a vertical direction.

3. The method of claim 1, wherein determining, based on the two-dimensional coordinates of the foot keypoint at the first moment and the second moment, the ground contact state of the foot of the human body at the second moment comprises:

   determining, based on the two-dimensional coordinates of the foot keypoint at the first moment and the second moment, a moving speed of the foot keypoint at the second moment; and
   determining, based on the moving speed, the ground contact state of the foot of the human body at the second moment.

4. The method of claim 3, wherein determining the moving speed of the foot keypoint at the second moment comprises:

   determining, based on the two-dimensional coordinates of the foot keypoint at the first moment and the second moment, a moving distance of the foot keypoint on the two-dimensional plane from the first moment to the second moment;
   determining, based on a difference between the first moment and the second moment and the moving distance, a moving distance of the foot keypoint per unit time; and
   using the moving distance per unit time as the moving speed of the foot keypoint.

5. The method of claim 3, wherein determining, based on the moving speed, the ground contact state of the foot of the human body at the second moment comprises:

comparing the moving speed of the foot keypoint with a foot ground contact threshold; and
determining that the foot where the foot keypoint is located is in a non-ground contact state at the second moment in response to determining that the moving speed of the foot keypoint is greater than the foot ground contact threshold; or
determining that the foot where the foot keypoint is located is in a ground contact state at the second moment in response to determining that the moving speed of the foot keypoint is less than or equal to the foot ground contact threshold.

6. The method of claim 5, wherein determining, based on the moving speed, the ground contact state of the foot of the human body at the second moment further comprises:

obtaining a depth parameter of the human body in the image;
projecting, based on the depth parameter, a preset average body height parameter onto the two-dimensional plane to obtain a projected height; and
using a product of the projected height and a preset first proportion as the foot ground contact threshold.

7. The method of claim 5, wherein determining, based on the moving speed, the ground contact state of the foot of the human body at the second moment further comprises:

determining whether both feet of the human body in the image are in the ground contact state or both are off the ground;
setting both feet of the human body in the image to be in the non-ground contact state at the second moment in response to determining that both feet of the human body in the image are off the ground; and
comparing respective moving speeds of the foot keypoints of both the feet in response to determining that both feet of the human body in the image are neither both on the ground nor both off the ground, setting the foot with a smaller moving speed of the foot keypoint as in the ground contact state at the second moment, and setting another foot as in the non-ground contact state at the second moment.

8. The method of claim 7, wherein determining whether the foot of the human body in the image is off the ground comprises:

determining, based on the two-dimensional coordinates of the foot keypoint at the first moment and the second moment, a moving speed of the foot keypoint in the vertical direction;
comparing the moving speed of the foot keypoint in the vertical direction with a foot lift-off threshold; and
determining that the foot where the foot keypoint is located is off the ground in response to determining that the moving speed of the foot keypoint in the vertical direction is greater than the foot lift-off threshold; or
determining that the foot where the foot keypoint is located is not off the ground in response to determining that the moving speed of the foot keypoint in the vertical direction is less than or equal to the foot lift-off threshold.

9. The method of claim 8, wherein determining whether the foot of the human body in the image is off the ground further comprises:

obtaining a depth parameter of the human body in the image;
projecting, based on the depth parameter, a preset average body height parameter onto the two-dimensional plane to obtain a projected height; and
using a product of the projected height and a preset second proportion as the foot lift-off threshold.

10. The method of claim 1, wherein determining, based on the ground contact state of the foot of the human body at the second moment and the three-dimensional coordinates of the foot keypoint at the first moment and the second moment, the position offset of the root node of the avatar at the second moment comprises:

determining, based on the three-dimensional coordinates of the foot keypoint at the first moment and the second moment, three-dimensional coordinates of a midpoint of both feet at the first moment and the second moment respectively in response to determining that both feet of the human body in the image are in the ground contact state at the second moment, and using a difference between the three-dimensional coordinates of the midpoint of both feet at the first moment and the second moment as the position offset of the root node of the avatar at the second moment;

determining, based on a position offset of the root node of the avatar at the first moment, the position offset of the root node of the avatar at the second moment in response to determining that both feet of the human body in the image are in a non-ground contact state at the second moment,;

using a difference between the three-dimensional coordinates of the foot keypoint of the first foot at the first moment and the second moment as the position offset of the root node of the avatar at the second moment in response to determining that a first foot of the human body in the image is in the ground contact state at the second moment and a second foot of the human body in the image is in the non-ground contact state at the second moment; and

using a difference between three-dimensional coordinates of a foot keypoint of the second foot at the first moment and the second moment as the position offset of the root node of the avatar at the second moment in response to determining that the second foot of the human body in the image is in the ground contact state at the second moment and the first foot of the human body in the image is in the non-ground contact state at the second moment,.

11. The method of claim 10, wherein determining, based on the position offset of the root node of the avatar at the first moment, the position offset of the root node of the avatar at the second moment comprises:

using a product of the position offset of the root node of the avatar at the first moment and a preset penalty coefficient as the position offset of the root node of the avatar at the second moment.

12. The method of claim 10, wherein determining, based on the ground contact state of the foot of the human body at the second moment and the three-dimensional coordinates of the foot keypoint at the first moment and the second moment, the position offset of the root node of the avatar at the second moment further comprises:

determining a height of a virtual ground; and

adjusting, based on the height of the virtual ground and the three-dimensional coordinates of the foot keypoint at the second moment, the position offset of the root node of the avatar at the second moment in response to determining that at least one of both feet of the human body is in the ground contact state at the second moment.

13. The method of claim 12, wherein determining the height of the virtual ground comprises:

obtaining a predetermined number of ground contact image frames, wherein at least one of both feet of the human body in the ground contact image frames is in the ground contact state;

obtaining the three-dimensional coordinates of the foot keypoint of the foot in the ground contact state in each of the predetermined number of ground contact image frames;

using coordinate values in a vertical direction in the three-dimensional coordinates as ground heights corresponding to the respective ground contact image frames; and

determining, based on the ground heights corresponding to the respective ground contact image frames, the height of the virtual ground.

14. The method of claim 13, wherein determining, based on the ground heights corresponding to the respective ground contact image frames, the height of the virtual ground comprises:

performing a sliding average on the ground heights corresponding to the respective ground contact image frames; and

using an obtained sliding average value as the height of the virtual ground.

15. The method of claim 12, wherein adjusting, based on the height of the virtual ground and the three-dimensional coordinates of the foot keypoint at the second moment, the position offset of the root node of the avatar at the second moment comprises:

determining, based on the three-dimensional coordinates of the foot keypoint at the second moment, a minimum height of both feet at the second moment;

determining, based on the height of the virtual ground, the minimum height of both feet at the second moment, and the position offset of the root node of the avatar at the second moment, a correction amount of the position offset of the root node of the avatar at the second moment; and

adjusting, based on the correction amount, the position offset of the root node of the avatar at the second moment.

16. The method of claim 15, wherein determining, based on the height of the virtual ground, the minimum height of both feet at the second moment, and the position offset of the root node of the avatar at the second moment, the correction amount of the position offset of the root node of the avatar at the second moment comprises:

summing a component in the vertical direction of the position offset of the root node of the avatar at the second moment and the minimum height of both feet at the second moment to obtain a height difference; and
using a difference between the height of the virtual ground and the height difference as the correction amount of the position offset of the root node of the avatar at the second moment.

17. The method of claim 15, wherein determining, based on the height of the virtual ground, the minimum height of both feet at the second moment, and the root node offset of the avatar at the second moment, the correction amount in the vertical direction of the root node offset of the avatar at the second moment comprises:

summing the component in the vertical direction of the position offset of the root node of the avatar at the second moment and the minimum height of both feet at the second moment to obtain a height difference;
using a product of the height difference and a preset correction speed coefficient as a single frame correction amount; and
using a difference between the height of the virtual ground and the single frame correction amount as the correction amount of the position offset of the root node of the avatar at the second moment.

18. The method of claim 1, wherein adjusting, based on the position offset, the position parameter of the root node of the avatar at the second moment comprises:

obtaining a position parameter of a root node of the human body at the second moment; and
summing the position parameter of the root node of the human body at the second moment and the position offset to obtain an adjusted position parameter of the root node of the avatar at the second moment.

19. An apparatus for driving an avatar, comprising:

an obtaining module configured to obtain three-dimensional coordinates of a foot keypoint of a human body in an image at a first moment and a second moment;
a projecting module configured to project the three-dimensional coordinates of the foot keypoint at the first moment and the second moment respectively onto a two-dimensional plane to obtain two-dimensional coordinates of the foot keypoint at the first moment and the second moment;
a ground contact detecting module configured to determine, based on the two-dimensional coordinates of the foot keypoint at the first moment and the second moment, a ground contact state of the foot of the human body at the second moment;
a position offset determining module configured to determine, based on the ground contact state of the foot of the human body at the second moment and the three-dimensional coordinates of the foot keypoint at the first moment and the second moment, a position offset of a root node of an avatar at the second moment; and
a position parameter adjusting module configured to adjust, based on the position offset, a position parameter of the root node of the avatar at the second moment.

20. An electronic device, comprising: a memory, a processor, and a computer program stored on the memory and executable by the processor, wherein the processor, when executing the computer program, performs the method for driving an avatar of any of claims 1 to 18.

21. A non-transitory computer-readable storage medium storing computer instructions, wherein the computer instructions are used to cause a computer to perform the method for driving an avatar of any of claims 1 to 18.

22. A computer program product, comprising computer program instructions that, when executed on a computer, cause the computer to perform the method for driving an avatar of any of claims 1 to 18.

FIG. 1

OBTAIN THREE-DIMENSIONAL COORDINATES OF A FOOT KEYPOINT OF A HUMAN BODY IN AN IMAGE AT A FIRST MOMENT AND A SECOND MOMENT

PROJECT THE THREE-DIMENSIONAL COORDINATES OF THE FOOT KEYPOINT AT THE FIRST MOMENT AND THE SECOND MOMENT RESPECTIVELY ONTO A TWO-DIMENSIONAL PLANE TO OBTAIN TWO-DIMENSIONAL COORDINATES OF THE FOOT KEYPOINT AT THE FIRST MOMENT AND THE SECOND MOMENT

DETERMINE, BASED ON THE TWO-DIMENSIONAL COORDINATES OF THE FOOT KEYPOINT AT THE FIRST MOMENT AND THE SECOND MOMENT, A GROUND CONTACT STATE OF THE FOOT OF THE HUMAN BODY AT THE SECOND MOMENT

DETERMINE, BASED ON THE GROUND CONTACT STATE OF THE FOOT OF THE HUMAN BODY AT THE SECOND MOMENT AND THE THREE-DIMENSIONAL COORDINATES OF THE FOOT KEYPOINT AT THE FIRST MOMENT AND THE SECOND MOMENT, A POSITION OFFSET OF A ROOT NODE OF AN AVATAR AT THE SECOND MOMENT

ADJUST, BASED ON THE POSITION OFFSET OF THE ROOT NODE OF THE AVATAR AT THE SECOND MOMENT, A POSITION PARAMETER OF THE ROOT NODE OF THE AVATAR AT THE SECOND MOMENT

FIG. 2

DETERMINE, BASED ON THE TWO-DIMENSIONAL COORDINATES OF THE FOOT KEYPOINT AT THE FIRST MOMENT AND THE SECOND MOMENT, A MOVING SPEED OF THE FOOT KEYPOINT ON THE TWO-DIMENSIONAL PLANE

DETERMINE, BASED ON THE MOVING SPEED, THE GROUND CONTACT STATE OF THE FOOT OF THE HUMAN BODY AT THE SECOND MOMENT

FIG. 3

COMPARE THE DETERMINED MOVING SPEED OF THE
FOOT KEYPOINT ON THE TWO-DIMENSIONAL PLANE WITH
A FOOT GROUND CONTACT THRESHOLD

402

THE MOVING SPEED OF THE
FOOT KEYPOINT IS GREATER
THAN THE FOOT GROUND
CONTACT THRESHOLD

THE MOVING SPEED OF THE
FOOT KEYPOINT IS LESS
THAN OR EQUAL TO THE
FOOT GROUND
CONTACT THRESHOLD

DETERMINE THAT A FOOT
WHERE THE FOOT
KEYPOINT IS LOCATED IS
IN A NON-GROUND
CONTACT STATE AT THE
SECOND MOMENT

404

DETERMINE THAT THE
FOOT WHERE THE FOOT
KEYPOINT IS LOCATED IS
IN A GROUND CONTACT
STATE AT THE SECOND
MOMENT

406

**FIG. 4**

DETERMINE WHETHER BOTH FEET OF THE HUMAN BODY IN THE IMAGE ARE IN THE
GROUND CONTACT STATE OR ARE BOTH OFF THE GROUND AT THE SECOND
MOMENT

502

BOTH FEET ARE IN
THE GROUND
CONTACT STATE AT THE
SECOND MOMENT

BOTH FEET ARE OFF
THE GROUND AT THE
SECOND MOMENT

BOTH FEET ARE NEITHER BOTH
ON THE GROUND NOR BOTH OFF
THE GROUND AT THE SECOND
MOMENT

KEEP BOTH FEET OF THE
HUMAN BODY IN THE IMAGE
IN THE GROUND CONTACT
STATE AT THE SECOND
MOMENT

504

SET BOTH FEET OF THE
HUMAN BODY IN THE IMAGE
TO AS THE NON-GROUND
CONTACT STATE AT THE
SECOND MOMENT

506

COMPARE MOVING SPEEDS
OF THE FOOT KEYPOINTS
OF BOTH FEET

508

SET A FOOT WITH A SMALLER
MOVING SPEED OF THE FOOT
KEYPOINT AS IN THE GROUND
CONTACT STATE AT THE SECOND
MOMENT, AND SET ANOTHER FOOT
AS IN THE NON-GROUND CONTACT
STATE AT THE SECOND MOMENT

510

**FIG. 5**

602

DETERMINE, BASED ON THE TWO-DIMENSIONAL COORDINATES OF THE FOOT KEYPOINT AT THE FIRST MOMENT AND THE SECOND MOMENT, A MOVING SPEED OF THE FOOT KEYPOINT IN THE VERTICAL DIRECTION

604

COMPARE THE MOVING SPEED OF THE FOOT KEYPOINT IN THE VERTICAL DIRECTION WITH A FOOT LIFT-OFF THRESHOLD

THE MOVING SPEED OF THE FOOT KEYPOINT IN THE VERTICAL DIRECTION IS GREATER THAN THE FOOT LIFT-OFF THRESHOLD DETERMINE

THE MOVING SPEED OF THE FOOT KEYPOINT IN THE VERTICAL DIRECTION IS LESS THAN OR EQUAL TO THE FOOT LIFT-OFF THRESHOLD DETERMINE

606

THAT THE FOOT WHERE THE FOOT KEYPOINT IS LOCATED IS OFF THE GROUND

608

THAT THE FOOT WHERE THE FOOT KEYPOINT IS LOCATED IS NOT OFF THE GROUND

FIG. 6

702

DETERMINE THE GROUND CONTACT STATE OF BOTH FEET OF THE HUMAN BODY IN THE IMAGE AT THE SECOND MOMENT

BOTH FEET ARE IN THE GROUND CONTACT STATE AT THE SECOND MOMENT

BOTH FEET ARE IN THE NON-GROUND CONTACT STATE AT

704

THE FIRST FOOT IS IN THE GROUND CONTACT STATE AND THE SECOND FOOT IS IN THE NON-GROUND CONTACT STATE

THE SECOND FOOT IS IN THE GROUND CONTACT STATE AND THE FIRST FOOT IS IN THE NON-GROUND CONTACT STATE

DETERMINE, BASED ON THE THREE-DIMENSIONAL COORDINATES OF THE FOOT KEYPOINT AT THE FIRST MOMENT AND THE SECOND MOMENT, THREE-DIMENSIONAL COORDINATES OF THE MIDPOINT OF BOTH FEET AT THE FIRST MOMENT AND THE SECOND MOMENT RESPECTIVELY

708

710

712

706

USE A DIFFERENCE BETWEEN THE THREE-DIMENSIONAL COORDINATES OF THE MIDPOINT OF BOTH FEET AT THE FIRST MOMENT AND THE SECOND MOMENT AS THE POSITION OFFSET OF THE ROOT NODE OF THE AVATAR AT THE SECOND MOMENT

USE A DIFFERENCE BETWEEN THE THREE-DIMENSIONAL COORDINATES OF THE FOOT KEYPOINT OF THE FIRST FOOT AT THE FIRST MOMENT AND THE SECOND MOMENT AS THE POSITION OFFSET OF THE ROOT NODE OF THE AVATAR AT THE SECOND MOMENT

USE A DIFFERENCE BETWEEN THE THREE-DIMENSIONAL COORDINATES OF THE FOOT KEYPOINT OF THE FIRST FOOT AT THE FIRST MOMENT AND THE SECOND MOMENT AS THE POSITION OFFSET OF THE ROOT NODE OF THE AVATAR AT THE SECOND MOMENT

USE A DIFFERENCE BETWEEN THREE-DIMENSIONAL COORDINATES OF THE FOOT KEYPOINT OF THE SECOND FOOT AT THE FIRST MOMENT AND THE SECOND MOMENT AS THE POSITION OFFSET OF THE ROOT NODE OF THE AVATAR AT THE SECOND MOMENT

FIG. 7

20

802

DETERMINE A HEIGHT OF A VIRTUAL GROUND

804

ADJUST, BASED ON THE HEIGHT OF THE VIRTUAL GROUND AND THE THREE-DIMENSIONAL COORDINATES OF THE FOOT KEYPOINT AT THE SECOND MOMENT, THE POSITION OFFSET OF THE ROOT NODE OF THE AVATAR AT THE SECOND MOMENT IN RESPONSE TO DETERMINING THAT AT LEAST ONE OF BOTH FEET OF THE HUMAN BODY IS IN THE GROUND CONTACT STATE AT THE SECOND MOMENT

**FIG. 8**

902

DETERMINE, BASED ON THE THREE-DIMENSIONAL COORDINATES OF THE FOOT KEYPOINT AT THE SECOND MOMENT, A MINIMUM HEIGHT OF BOTH FEET AT THE SECOND MOMENT

904

DETERMINE, BASED ON THE HEIGHT OF THE VIRTUAL GROUND, THE MINIMUM HEIGHT OF BOTH FEET AT THE SECOND MOMENT, AND THE POSITION OFFSET OF THE ROOT NODE OF THE AVATAR AT THE SECOND MOMENT, A CORRECTION AMOUNT OF THE POSITION OFFSET OF THE ROOT NODE OF THE AVATAR AT THE SECOND MOMENT

906

ADJUST, BASED ON THE CORRECTION AMOUNT, THE POSITION OFFSET OF THE ROOT NODE OF THE AVATAR AT THE SECOND MOMENT

**FIG. 9**

| OBTAINING MODULE 1010 | → | PROJECT-ING MODULE 1020 | → | GROUND CONTACT DETECT-ING MODULE 1030 | → | POSITION OFFSET DETERMIN-ING MODULE 1040 | → | POSITION PARAME-TER ADJUSTING MODULE 1050 |

**FIG. 10**

FIG. 11

## INTERNATIONAL SEARCH REPORT

| | International application No. |
|---|---|
| | **PCT/CN2024/113920** |

### A. CLASSIFICATION OF SUBJECT MATTER

G06T13/40(2011.01)i

According to International Patent Classification (IPC) or to both national classification and IPC

### B. FIELDS SEARCHED

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 百度, BAIDU; WPABS; EPTXT; USTXT; WOTXT: 视频, 图像, 虚拟, 卡通, 形象, 对象, 人, 角色, 脚, 坐标, 位置, 节点, 二维, 平面, 三维, 接地, 离地, 地面, 距离, 高度, 时间, 时刻, 悬浮, 漂浮, video, image, picture, virtual, animation, carton, object, person, character, foot, coordinate, location, position, node, 2D, two-dimension, plane, 3D, three-dimension, contact, ground, distance, height, time, float, suspend

### C. DOCUMENTS CONSIDERED TO BE RELEVANT

| Category* | Citation of document, with indication, where appropriate, of the relevant passages | Relevant to claim No. |
|---|---|---|
| A | CN 113706699 A (TENCENT TECHNOLOGY (SHENZHEN) CO., LTD.) 26 November 2021 (2021-11-26)<br>description, paragraphs [0064]-[0092] | 1-22 |
| A | CN 114494334 A (BEIJING BAIDU NETCOM SCIENCE AND TECHNOLOGY CO., LTD.) 13 May 2022 (2022-05-13)<br>entire document | 1-22 |
| A | CN 115105059 A (SHENZHEN QIANHAI XIANGFANG FUTURE TECHNOLOGY CO., LTD.) 27 September 2022 (2022-09-27)<br>entire document | 1-22 |
| A | US 2022189094 A1 (TENCENT TECHNOLOGY (SHENZHEN) CO., LTD.) 16 June 2022 (2022-06-16)<br>entire document | 1-22 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 September 2024** | **30 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/113920** |

### C. DOCUMENTS CONSIDERED TO BE RELEVANT

| Category* | Citation of document, with indication, where appropriate, of the relevant passages | Relevant to claim No. |
| --- | --- | --- |
| A | KR 20140092536 A (INDUSTRY ACADEMIC COOPERATION FOUNDATION KEIMYUNG UNIVERSITY) 24 July 2014 (2014-07-24)<br>entire document | 1-22 |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| CN | 113706699 | A | 26 November 2021 | CN | 113706699 | B | 08 February 2022 |
| | | | | WO | 2023071964 | A1 | 04 May 2023 |
| | | | | US | 2023290101 | A1 | 14 September 2023 |
| | | | | EP | 4307233 | A1 | 17 January 2024 |
| | | | | JP | 2024519940 | W | 21 May 2024 |
| CN | 114494334 | A | 13 May 2022 | CN | 114494334 | B | 03 February 2023 |
| | | | | US | 2023245339 | A1 | 03 August 2023 |
| | | | | KR | 20230116735 | A | 04 August 2023 |
| | | | | JP | 2023110913 | A | 09 August 2023 |
| | | | | JP | 7417772 | B2 | 18 January 2024 |
| CN | 115105059 | A | 27 September 2022 | WO | 2023236353 | A1 | 14 December 2023 |
| US | 2022189094 | A1 | 16 June 2022 | US | 11836841 | B2 | 05 December 2023 |
| | | | | WO | 2021160108 | A1 | 19 August 2021 |
| | | | | CN | 111298433 | A | 19 June 2020 |
| | | | | CN | 111298433 | B | 29 July 2022 |
| | | | | HK | 40024162 | A0 | 11 December 2020 |
| | | | | HK | 40024162 | A1 | 04 November 2022 |
| KR | 20140092536 | A | 24 July 2014 | KR | 101504103 | B1 | 19 March 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311277653X